# EUROPEAN PATENT SPECIFICATION

(11) **EP 0 882 784 B1**
(45) Date of publication and mention of the grant of the patent: **09.10.2002**
(21) Application number: 97946068.0
(22) Date of filing: 02.12.1997
(51) Int. Cl.: C11D 1/722, C11D 1/29, C11D 1/16, C11D 1/825, C11D 1/83, C11D 17/08, B01F 17/02, B01F 17/42

(54) **SURFACTANT COMPOSITION**
TENSIDZUSAMMENSETZUNG
COMPOSITION TENSIO-ACTIVE

(30) Priority: 02.12.1996 JP 32127196
(43) Date of publication of application: 09.12.1998
(73) Proprietor: Kao Corporation, Chuo-Ku Tokyo 103 (JP)
(72) Inventor: ISHII, Yasuo, Kao Corporation, Wakayama-shi, Wakayama 640 (JP); MORI, Atsuhito, Kao Corporation, Wakayama-shi, Wakayama 640 (JP); SAWADA, Hiroki, Kao Corporation, Wakayama-shi, Wakayama 640 (JP)
(74) Representative: Kindler, Matthias, Dr. Dipl.-Chem.
(86) International application number: JP9704393
(87) International publication number: WO98024866

(56) References cited:
- EP-A- 0 506 087
- DE-A- 4 232 414
- JP-A- 3 062 899
- JP-A- 47 009 561
- US-A- 4 268 401

## Description

### Technical Field

The present invention relates to a surfactant composition. In particular, the present invention relates to a surfactant composition easily soluble in water to form an aqueous surfactant solution having a high concentration and a low viscosity and useful as a detergent for household or industrial use, an emulsifier, a solubilizer or a dispersant.

### Background Art

It has been known from old times that a surfactant is usable as a detergent, an emulsifier, a solubilizer or a dispersant. However, since a thick aqueous solution of a surfactant tends to gel or is highly viscous, the usage thereof and the preparation of a composition containing a surfactant are under many restrictions.

Therefore, there have been proposed various methods to reduce the viscosity of a concentrated aqueous solution of a surfactant by adding an additive thereto.

Such methods include, for example, a method wherein polyethylene glycol is added to a mixture of an anionic surfactant and a nonionic surfactant (JP-B-44-1703 and JP-A-4-227698), and a method wherein a combination of specified solvents is added to the solution (JP-A-50-92308). In addition, it is well known that ethanol or propylene glycol is added (JP-A-8-3587) and that a hydrotrope such as sodium p-toluenesulfonate is added thereto.

However, since polyethylene glycol has a high melting point (Nonionic Surfactant, Edited by Shick, p. 784, published by Marcel Dekker in 1967), it has problems of the handleability and stability of the composition and, in addition, the effect thereof is insufficient. Although solvents such as ethanol have excellent effects, they increase the risk of ignition of fire and have a strong smell. On the other hand, the amount of the ionic hydrotrope such as sodium p-toluenesulfonate to be added is limited because it is expensive and has a high ionic strength.

WO 96/33800 discloses a technique of homogeneously dispersing or solubilizing a surfactant hardly soluble in water, particularly a cationic surfactant, in water by using a dihydric alcohol having 4 to 12 carbon atoms or an alkylene oxide adduct thereof.

US-A 4,338,212 discloses a combination of a nonionic surfactant of an ethylene oxide adduct type with an ethylene oxide adduct of an alkane-1, 2-diol.

### Disclosure of Invention

An object of the present invention is to provide a surfactant composition which contains an additive free from the problems of the risk of ignition and the smell and also from the risk of solidifying in winter and which can easily provide an aqueous solution of a low viscosity.

The inventors have found that the above-described problems can be solved by a composition comprising a polyoxyalkylene-based compound having a specified structure and a surfactant. The present invention has been completed on the basis of this finding.

The present invention provides a surfactant composition comprising a compound represented by the following general formula (I) and at least one surfactant:

A-[(EO)ₓ-(PO)_{y}-(EO)_{x'}-H]ₙ (I)

wherein A represents a residue derived from a compound having n active hydrogen atoms by removing therefrom all the active hydrogen atoms; n represents a number of from 2 to 4; EO represents oxyethylene; PO represents oxypropylene; x and x' represent each a mean number of moles of the ethylene oxide added and are each 1 or above; and y represents a mean number of moles of the propylene oxide added and ranges from 0.5 to 6, provided (EO)ₓ, (PO)_{y} and (EO)ₓ, are bonded to each other in block in this order.

The mode for carrying out the present invention will now be described in detail.

The compounds of the formula (I) to be used in the present invention can be prepared by the addition reaction of ethylene oxide, propylene oxide and then ethylene oxide in block in this order with a compound of the formula (II):

A-[H]ₙ (II)

(wherein A and n are as defined above).

The compounds of the formula (II) include, for example, n-hydric alcohols, amines and amides as well as water, ammonia and hydrogen sulfide. Water and a polyhydric alcohol having 6 or less carbon atoms are preferred because they are difficultly colored and are free from the problem of the smell. The smaller the value of n, the smaller the molecular weight of the compound of the formula (I) and, therefore, the better it is for reducing the viscosity of the aqueous solution of the composition of the present invention.

Examples of the compounds of the formula (II) include those wherein n is 2, such as water, ethylene glycol, propylene glycol, diethylene glycol, triethylene glycol, 1,3-butanediol, 1,6-hexanediol, neopentyl glycol and methyldiethanolamine; those wherein n is 3, such as glycerol, trimethylolpropane and triethanolamine; and those wherein n is 4, such as pentaerythritol and diglycerol. Among them, water, ethylene glycol, propylene glycol and neopentyl glycol are particularly preferred.

For the addition reaction of the alkylene oxides with the compound of the formula (II), a well-known alkoxylation method wherein the reaction is conducted in the presence of a catalyst can be mentioned. In the present invention, the order of the reaction of the alkylene oxides is important. Ethylene oxide is reacted at first, then propylene oxide is reacted and finally ethylene oxide is reacted in block. The catalyst used for the alkoxylation may be any of acid catalysts and basic catalysts. The alkylene oxide adduct can be synthesized also by using a catalyst which realizes a narrow range of distribution of addition of alkylene oxide, such as MgO-ZnO, MgO-SnO, MgO-TiO₂ or MgO-SbO as described in JP-A-7-227540 or a catalyst which selectively realizes a narrow range of distribution of addition of alkylene oxide, such as a Mg-containing catalyst described in JP-A-1-164437.

Each mean number of moles x or x' of the ethylene oxide added, in the compound of the formula (I) of the present invention, is 1 or above. The sum (x + x') is preferably 4 to 20, still preferably 5 to 16, per one (EO)ₓ-(PO)_{y}-(EO)_{x'}-H chain for obtaining a specially high compatibility of the compound of the formula (I) with water for preventing the compound from solidifying, thereby obtaining the intended aqueous surfactant solution having a low viscosity.

The mean number of moles y of the propylene oxide added in the compound of the formula (I) of the present invention is 0.5 to 6, preferably 1 to 4.5 per one (EO)ₓ-(PO)_{y}-(EO)_{x'}-H chain. When the mean number of moles of the propylene oxide added exceeds 6, the solubility of the compound of the formula (I) in water is reduced or the foaming thereof becomes difficult and, on the contrary, when it is below 0.5 mole, the handleability and stability of the composition are unsatisfactory.

The surfactant composition of the present invention comprises the compound of the above formula (I) and a surfactant. The surfactant usable in the present invention may be any of anionic surfactants, cationic surfactants, amphoteric surfactants and nonionic surfactants, or a mixture of several kinds of surfactants.

The anionic surfactants include, for example, alkylsulfuric acid salts, alkyl ether sulfuric acid salts, linear alkylbenzenesulfonic acid salts, α -olefinsulfonic acid salts, α - sulfofatty acid salts, higher fatty acid salts, alkanesulfonic acid salts and carboxymethylated higher alcohol ethoxylates. In particular, the alkylsulfuric acid salts include sodium dodecyl sulfate, potassium tetradecyl sulfate, and sodium decyl sulfate. The alkyl ether sulfuric acid salts include n-C₁₂H₂₅O(EO)ₘSO₃Na (m=2 to 4) and sodium salts of sulfuric esters of ethylene oxide adducts of oxo alcohols [such as Dobanol 23 and Dobanol 25 (trade names of products of Mitsubishi Chemical Corp.)] The linear alkylbenzenesulfonic acid salts include sodium dodecylbenzenesulfonate, and the higher fatty acid salts include sodium laurate, potassium salt of semi-hardened beef tallow fatty acid and sodium oleate.

The cationic surfactants include, for example, alkyltrimethylammonium salts, alkylpyridinium salts, dialkyldimethylammonium salts, quaternary salts obtained by reacting a dihydroxyethylalkylamine and diethyl sulfate or dimethyl sulfate, and alkylamines and alkyldimethylamines neutralized with an acid, wherein the alkyl groups have 8 to 18 carbon atoms.

The amphoteric surfactants include carboxymethylated alkyldimethylamines and alkyldimethylamine oxides wherein the alkyl groups have 8 to 18 carbon atoms.

The nonionic surfactants include polyoxyethylene alkyl ethers, polyoxyethylene alkylaryl ethers, polyoxyethylene sorbitan fatty acid esters, sucrose fatty acid esters, polyglycerol fatty acid esters, alkylpolyglycosides, polyoxyalkylene alkyl ethers obtained by the addition reaction of ethylene oxide and propylene oxide with an alcohol. In particular, the nonionic surfactants include polyoxyethylene lauryl ethers, polyoxyethylene myristyl ethers, polyoxyethylene nonylphenyl ethers, polyoxyethylene sorbitan laurates, polyglycerol oleates, polyoxyethylene polyoxypropylene lauryl ethers (products obtained by various modes of addition reaction, such as those obtained by the reaction of ethylene oxide with an alcohol followed by the reaction of propylene oxide with the resultant adduct, those obtained by the reaction of propylene oxide with an alcohol followed by the reaction of ethylene oxide with the resultant adduct, those obtained by the reaction of ethylene oxide and propylene oxide with an alcohol at random, and those obtained by the reaction of ethylene oxide, then propylene oxide and again ethylene oxide with an alcohol), and products obtained by the reaction of ethylene oxide and propylene oxide with a synthetic alcohol [such as Dobanol 23 and Dobanol 25 (trade names of products of Mitsubishi Chemical Corp.)] synthesized by the oxo method (including products obtained by various modes of addition).

In the above-described surfactants, the nonionic surfactants and anionic surfactants are preferred, and polyoxyalkylene alkyl ethers and alkyl ether sulfates are particularly preferred.

The amount of the compound of the general formula (I) in the surfactant composition of the present invention, which is variable as required, is preferably 0.01 to 20 % by weight, particularly 0.1 to 10 % by weight.

The surfactant content of the surfactant composition of the present invention, which is not particularly limited, is preferably 1 to 99.99 % by weight, still preferably 10 to 99.9 % by weight.

The surfactant composition of the present invention may be a water-free composition comprising only the surfactant and the compound of the general formula (I), or it may further contain a solvent such as ethanol, isopropanol, propylene glycol, ethylene glycol monobutyl ether or diethylene glycol monobutyl ether, a dispersant such as sodium polyacrylate, chelating agent such as sodium nitrilotriacetate or sodium ethylenediaminetetraacetate, an alkali agent such as monoethanolamine, diethanolamine or triethanolamine, and an inorganic material such as zeolite, a silicate or a polyphosphate so far as the effect of the present invention is not impaired thereby. Further, the composition may be in the form of an aqueous solution comprising the above-described components and water.

The surfactant composition of the present invention is free from the problems of the risk of ignition of fire and smell. Since there is no risk of the surfactant composition solidifying during winter, due to the additive in the composition having a low solidifying point, an aqueous solution having a viscosity lower than those of conventional ones can be easily prepared. Therefore, the surfactant composition is usable as a household or industrial detergent, emulsifier, solubilizer or dispersant, and as a raw material or a final product of several formulations.

The following Synthesis Examples of the compounds of the formula (I) and Examples of the surfactant compositions of the present invention will further illustrate the present invention, which by no means limit the invention.

Unless otherwise stated, the percentages in the following Examples are given by weight.

### Synthesis Example 1

Synthesis of the compound of the following formula (I-1) [hereinafter referred to as "compound (I-1)"]:

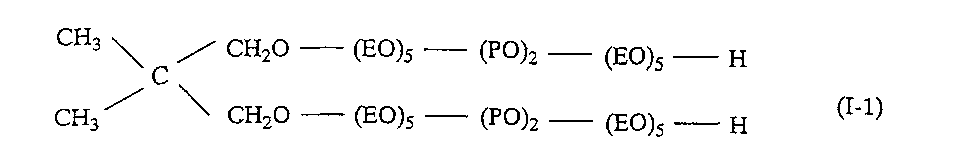

250 g of neopentyl glycol and 5.4 g of potassium hydroxide were fed into a 5 1 rotary agitated autoclave having two metering tanks for ethylene oxide and propylene oxide respectively. After the purging with nitrogen, the temperature was elevated to 110°C and the dehydration was conducted under 40 Torr for one hour. After the temperature was elevated to 150°C, 1057 g of ethylene oxide was introduced into the autoclave under a pressure of 3.5 kg/cm² and the reaction was carried out until the pressure was lowered to a constant level. After the reaction mixture was cooled to 120°C, 557 g of propylene oxide was introduced into the autoclave under a pressure of 3.5 kg/cm² and the reaction was carried out until the pressure was lowered to a constant level in the same manner as that of the reaction with ethylene oxide. After the temperature was elevated again to 150°C, 1057 g of ethylene oxide was introduced thereinto and the reaction was carried out until the pressure was lowered to a constant level. After the completion of the reaction, the temperature was lowered and the synthesized sample was taken out. About 2.9 kg of the compound (I-1) was thus obtained. This compound (I-1) had a solidifying point of 0°C or below.

### Synthesis Example 2

Synthesis of a compound of the following formula (I-2) [hereinafter referred to as "compound (I-2)"]:

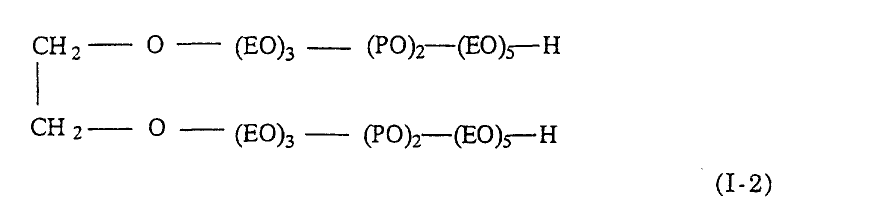

The same procedure as that of Synthesis Example 1 was repeated except that neopentyl glycol was replaced with 149 g of ethylene glycol, and that 634 g of ethylene oxide, then 557 g of propylene oxide and then 1057 g of ethylene oxide were reacted to obtain the compound (I-2). This compound (I-2) had a solidifying point of 0°C or below.

### Synthesis Example 3

Synthesis of a compound of the following formula (I-3) [hereinafter referred to as "compound (I-3)"]:

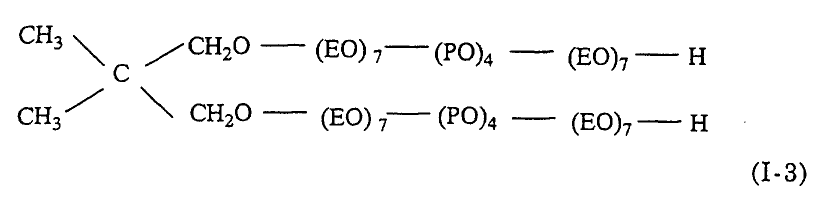

The same procedure as that of Synthesis Example 1 was repeated except that 1480 g of ethylene oxide, then 1114 g of propylene oxide and then 1480 g of ethylene oxide were reacted to obtain the compound (I-3). This compound (I-3) had a solidifying point of 0°C or below.

### Synthesis Example 4

Synthesis of a mixture of compounds of the following formulae (I-4a) and (I-4b) [hereinafter referred to as "compound (I-4)"]:

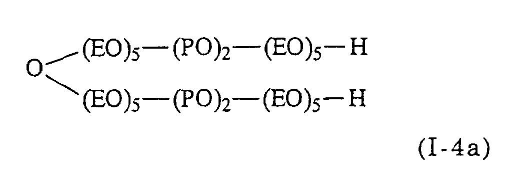

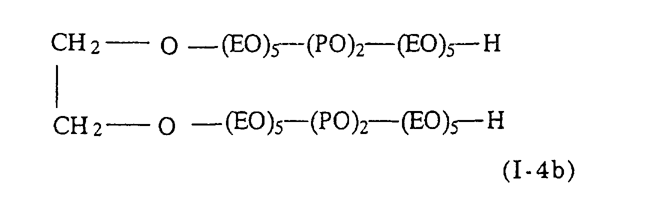

The same procedure as that of Synthesis Example 1 was repeated except that neopentyl glycol was replaced with 149 g of ethylene glycol, that 11.3 g of 48 % aqueous potassium hydroxide solution was fed and that the temperature was elevated to 150°C without the dehydration after purging with nitrogen. The water content before the temperature elevation was 4.7 %.

The reaction was carried out in the same manner as that of Synthesis Example 1 except that 1243 g of ethylene oxide, then 655 g of propylene oxide and further 1243 g of ethylene oxide were reacted to synthesize the mixture (I-4).

The mixture had a water content of 0.07 % and a hydroxyl value of 96.5 mgKOH/g. From this fact, it was confirmed that most of water in the starting materials fed had reacted to form the mixture (I-4).

### Examples 1 to 10 and Comparative Examples 1 to 15

Surfactant compositions shown in Tables 1 and 2 were obtained by adding water to the surfactant and additives listed in these Tables. The viscosity of each surfactant composition at 25°C was determined. The results are given in Tables 1 and 2.

The viscosity of the aqueous solution was determined with a type E viscometer (VISCONIC-EMD mfd. by Toki Commercial Co., Ltd.).

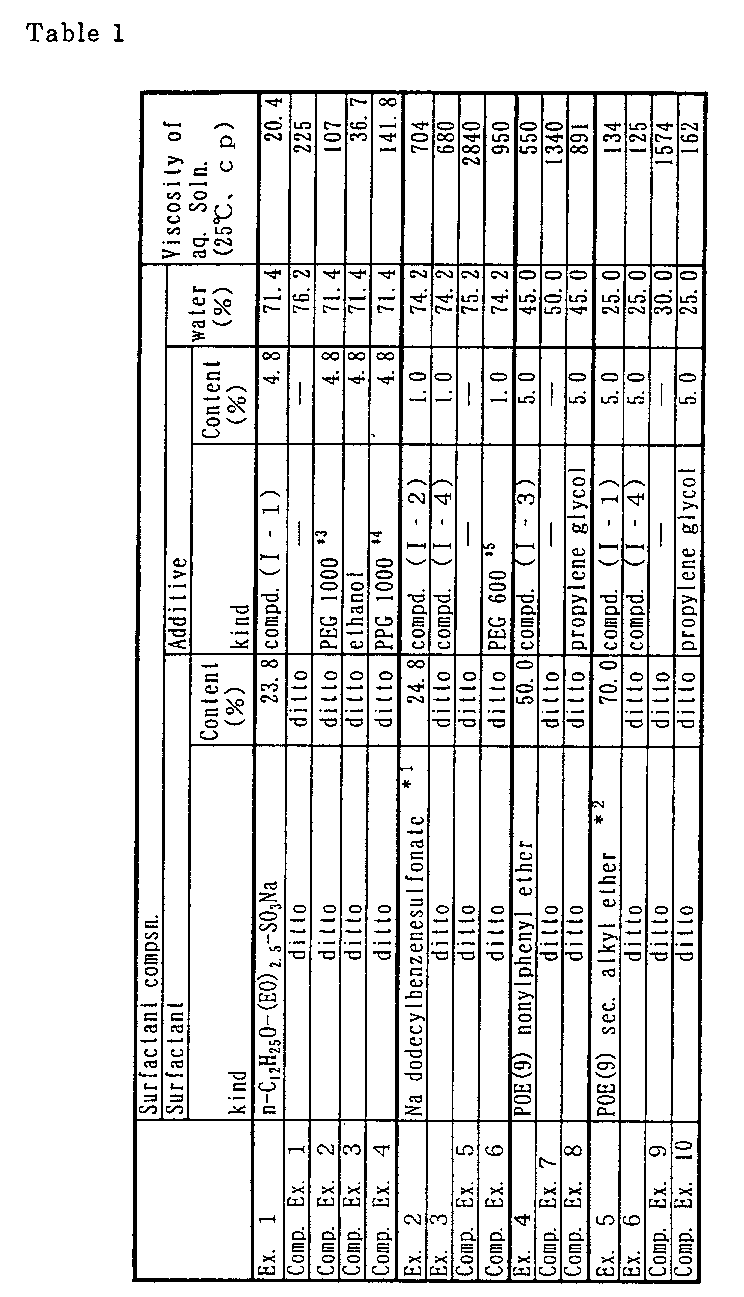

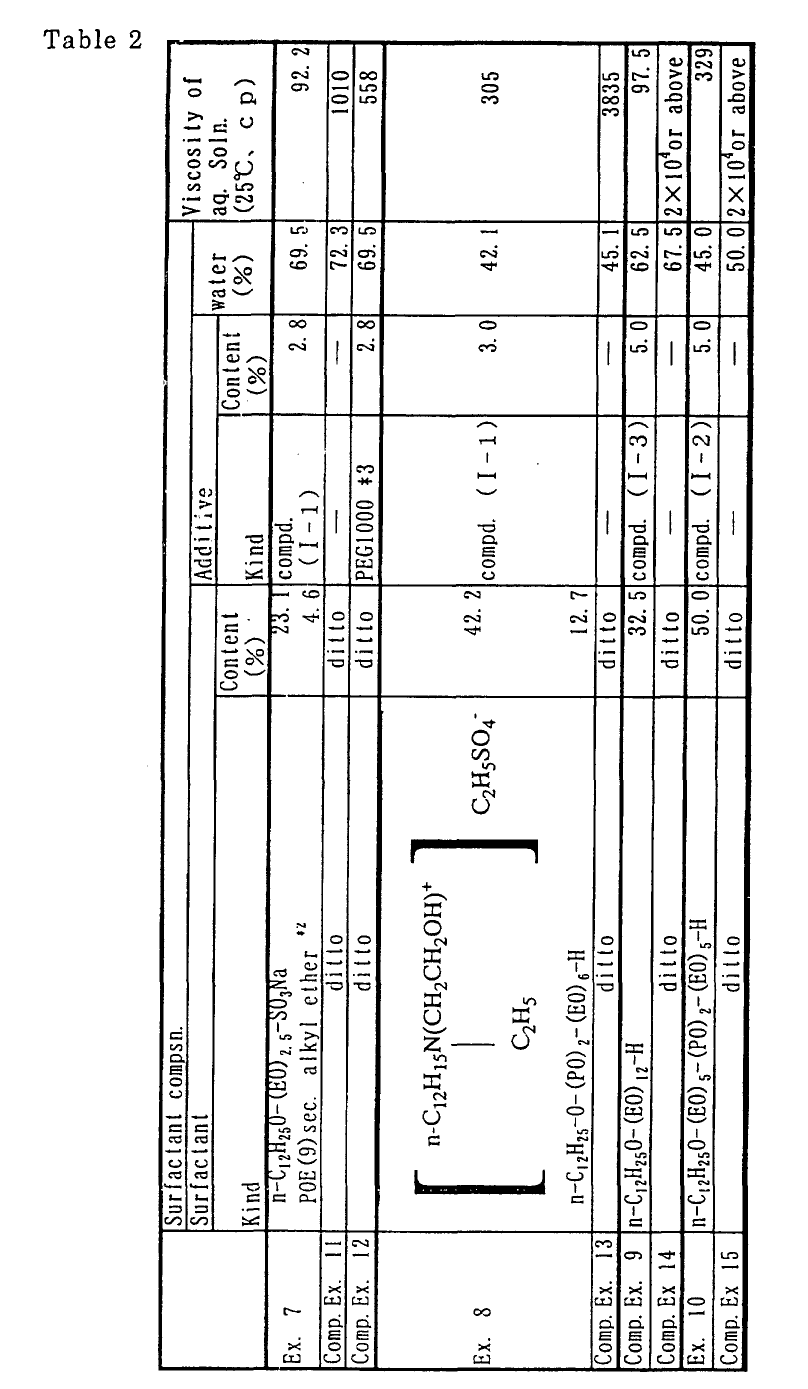

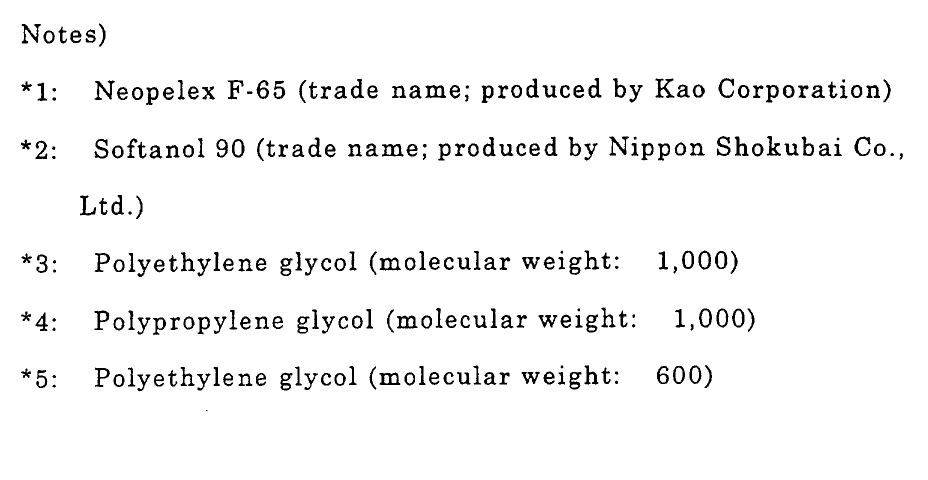

## Claims

1. A surfactant composition comprising a compound represented by the following general formula (I) and at least one surfactant:
A-[(EO)ₓ-(PO)_{y}-(EO)_{x'}-H]ₙ (I)
wherein A represents a residue derived from a compound having n active hydrogen atoms by removing therefrom all the active hydrogen atoms; n represents a number of from 2 to 4; EO represents oxyethylene; PO represents oxypropylene; x and x' represent each a mean number of moles of the ethylene oxide added and are each 1 or above; and y represents a mean number of moles of the propylene oxide added and ranges from 0.5 to 6, provided (EO)ₓ, (PO)_{y} and (EO)_{x'} are bonded to each other in block in this order.

2. The composition as set forth in claim 1, wherein the sum of x and x' is 4 to 20.

3. The composition as set forth in claim 1, wherein the surfactant is a nonionic surfactant or an anionic surfactant.

4. The composition as set forth in claim 1, wherein A is a residue derived from water or a polyhydric alcohol having 6 or less carbon atoms by removing therefrom active hydrogen atoms.

5. The composition as set forth in claim 1, wherein A is a residue derived from water, ethylene glycol, propylene glycol or neopentyl glycol by removing therefrom active hydrogen atoms.

6. The composition as set forth in claim 1, wherein y ranges from 1 to 4.5.

7. The composition as set forth in claim 1, wherein the surfactant is a polyoxyalkylene alkyl ether or an alkyl ether sulfuric acid salt.

8. The composition as set forth in claim 1, wherein the content of the compound of the formula (I) is 0.01 to 20 % by weight.

## Patentansprüche

1. Tensidzusammensetzung, umfassend eine Verbindung mit der folgenden allgemeinen Formel (I) und zumindest ein Tensid:
A-[(EO)ₓ-(PO)_{y}-(EO)_{x'}-H]ₙ (I)
worin A ein Rest ist, der von einer Verbindung mit n aktiven Wasserstoffatomen durch Entfernung aller aktiver Wasserstoffatome davon stammt; n eine Zahl von 2 bis 4 ist; EO Oxyethylen, PO Oxypropylen, x und x' jeweils eine mittlere Molzahl der zugegebenen Ethylenoxide und jeweils 1 oder mehr sind; und y eine mittlere Molzahl der zugegebenen Propylenoxide ist und im Bereich von 0,5 bis 6 liegt, vorausgesetzt, dass (EO)ₓ (PO)_{y} und (EO)ₓ' im Block in dieser Reihenfolge aneinander gebunden sind.

2. Zusammensetzung nach Anspruch 1, worin die Summe von x und x' 4 bis 20 ist.

3. Zusammensetzung nach Anspruch 1, worin das Tensid ein nichtionisches oder anionisches Tensid ist.

4. Zusammensetzung nach Anspruch 1, worin ein A ein Rest ist, der von Wasser oder einem mehrwertigen Alkohol mit 6 oder weniger Kohlenstoffatomen stammt, indem die aktiven Wasserstoffatome von diesem entfernt sind.

5. Zusammensetzung nach Anspruch 1, worin A ein Rest ist, der von Wasser, Ethylenglykol, Propylenglykol oder Neopentylglykol durch Entfernung der aktiven Wasserstoffatome stammt.

6. Zusammensetzung nach Anspruch 1, worin y im Bereich von 1 bis 4,5 liegt.

7. Zusammensetzung nach Anspruch 1, worin das Tensid ein Polyoxyalkylenalkylether oder ein Alkyletherschwefelsäuresalz ist.

8. Zusammensetzung nach Anspruch 1, worin der Gehalt der Verbindung der Formel (I) 0,01 bis 20 Gew.% ist.

## Revendications

1. Composition tensioactive comprenant un composé représenté par la formule générale (I) suivante et au moins un tensioactif :
A- [(EO)ₓ- (PO)_{y}- (EO)_{x'}-H]ₙ (I)
dans laquelle A représente un reste dérivé d'un composé ayant n atomes d'hydrogène actifs en enlevant de celui-ci tous les atomes d'hydrogène actifs; n représente un nombre de 2 à 4; EO représente un oxyéthylène; PO représente un oxypropylène; x et x' représentent chacun un nombre moyen de moles d'oxyde d'éthylène ajouté et sont chacun 1 ou au-dessus; et y représente un nombre moyen de moles d'oxyde de propylène ajouté et est dans la gamme de 0,5 à 6, avec la condition que (EO)ₓ, (PO)_{y} et (EO)_{x'} soient liés les uns aux autres en séquence dans cet ordre.

2. Composition selon la revendication 1, dans laquelle la somme de x et x' est de 4 à 20.

3. Composition selon la revendication 1, dans laquelle le tensioactif est un tensioactif non ionique ou un tensioactif anionique.

4. Composition selon la revendication 1, dans laquelle A est un reste dérivé de l'eau ou d'un polyol ayant 6 atomes de carbone ou moins en enlevant de ceux-ci les atomes d'hydrogène actifs.

5. Composition selon la revendication 1, dans laquelle A est un reste dérivé de l'eau, de l'éthylène glycol, du propylène glycol ou du néopentylglycol en enlevant de ceux-ci les atomes d'hydrogène actifs.

6. Composition selon la revendication 1, dans laquelle y est dans la gamme de 1 à 4,5.

7. Composition selon la revendication 1, dans laquelle le tensioactif est un polyoxyéthylène alkyl éther ou un sel d'acide sulfurique d'éther d'alkyle.

8. Composition selon la revendication 1, dans laquelle la teneur en composé de formule (I) est de 0,01 à 20 % en poids.
